# EUROPEAN PATENT APPLICATION

(11) **EP 4 372 174 A1**
(43) Date of publication of application: **22.05.2024**
(21) Application number: 23209155.3
(22) Date of filing: 10.11.2023
(51) Int. Cl.: E04D 13/10, E04D 13/12, E04G 21/32, E06C 1/34, F24S 25/61, H02S 20/23

(54) **FASTENING ARRANGEMENT FOR FASTENING ROOF EQUIPMENT TO A ROOF**

(30) Priority: 15.11.2022 SE 2251340
(71) Applicant: CWL Patent AB, 792 22 Mora (SE)
(72) Inventor: Hedlund, Rolf, Mora (SE); Fröderberg, Andreas, Mora (SE)
(74) Representative: Ehrner & Delmar Patentbyrå AB

(57) **Abstract**

The invention relates to a fastening arrangement (100) for fastening roof equipment (200) to a roof (300), the fastening arrangement (100) comprising: an attachment portion (110) comprising at least one attachment means (112) for attaching the fastening arrangement (100) to the roof (300); and an engagement portion (120) comprising at least one engagement means (130) for engagement with a roof equipment (200), the engagement means (130) comprising a receiving portion (140) for receiving the roof equipment (200) and a securing portion (150) comprising a securing means (152) for securing a portion of the roof equipment (200) to the fastening arrangement (100), wherein the securing portion (150) extends from the receiving portion (140) in an angle. The invention also relates to a method for producing such a fastening arrangement (100).

## Description

### Technical Field

The invention relates to a fastening arrangement for fastening roof equipment to a roof. Furthermore, the invention also relates to a method for producing such a fastening arrangement.

### Background

Different fastening arrangements for fastening or attaching roof equipment to a roof are provided on the market. Such fastening arrangements may comprise one or more brackets for engagement with the roof equipment and one or more fastening means or fastening devices for fastening the bracket to a roof. Examples of roof equipment are ladders, snow fences, safety equipment and solar panels.

### Summary

An objective of embodiments of the invention is to provide a solution which mitigates or solves the drawbacks and problems of conventional solutions.

A further objective of embodiments of the invention is to provide a solution which makes mounting of roof equipment to a roof easier than conventional solutions.

The above and further objectives are solved by the subject matter of the independent claims. Further advantageous embodiments of the invention can be found in the dependent claims.

According to a first aspect of the invention, the above mentioned and other objectives are achieved with a fastening arrangement for fastening roof equipment to a roof, the fastening arrangement comprising:
an attachment portion comprising at least one attachment means for attaching the fastening arrangement to the roof; and
an engagement portion comprising at least one engagement means for engagement with a roof equipment, the engagement means comprising a receiving portion for receiving the roof equipment and a securing portion comprising a securing means for securing a portion of the roof equipment to the fastening arrangement, wherein the securing portion extends from the receiving portion in an angle.

The angle may be 90 degrees and the securing portion may hence be perpendicular to the receiving portion but is not limited thereto. The angle may be larger than 0 degrees and smaller than 180 degrees in relation to the receiving portion. The angel may e.g., be in an interval between 45 to 135 degrees, 60 to 120 degrees, or 80 to 100 degrees.

An advantage of the fastening arrangement according to the first aspect is that a roof equipment can be securely attached to the roof since the roof equipment can be both received in and secured by the engagement means of the fastening arrangement. Furthermore, mounting of the roof equipment to a roof is easier than with conventional solutions as the engagement means comprises integrated securing means for securing the roof equipment to the fastening arrangement. Thus, no separate part for securing the roof equipment to the fastening arrangement is needed.

In an embodiment of a fastening arrangement according to the first aspect, the engagement means is arranged in a non-peripheral section of the engagement portion.

An advantage with this embodiment is that the engagement means is surrounded by the engagement portion, making the engagement means more robust. The roof equipment can thereby be more securely attached to the roof.

In an embodiment of a fastening arrangement according to the first aspect, the securing portion is smaller than the receiving portion.

An advantage with this embodiment is that the securing portion can be formed within the receiving portion. The securing portion and the receiving portion can thereby be formed together from a single piece of sheet metal, reducing the amount of material needed.

In an embodiment of a fastening arrangement according to the first aspect, the receiving portion extends in a plane of the engagement portion.

In an embodiment of a fastening arrangement according to the first aspect, the securing portion extends perpendicular to the receiving portion.

An advantage with this embodiment is that the roof equipment can easily be received and secured by the engagement means of the fastening arrangement.

In an embodiment of a fastening arrangement according to the first aspect, the securing portion extends outwards from a section of the receiving portion.

In an embodiment of a fastening arrangement according to the first aspect, the section of the receiving portion faces a ridge or an eaves of the roof, in operation.

The expression "in operation" herein may be understood to mean when the fastening arrangement is attached to a roof, i.e., when the fastening arrangement is mounted for use on the roof, and may refer to how different parts are arranged and/or located in relation to each other and/or to different parts of the roof, such as roof structure and tiles, when the fastening arrangement is mounted in use.

An advantage with this embodiment is that the securing portion can be easily accessible to personal on the roof when the securing portion faces the ridge. Thereby, making the mounting of the roof equipment easier and safer. Alternatively, the securing portion can provide support for the roof equipment in an inclination direction of the roof when the securing portion faces the eaves. The fastening arrangement can thereby provide an improved support for the roof equipment.

In an embodiment of a fastening arrangement according to the first aspect, the attachment portion extends perpendicular to a plane of the engagement portion. The attachment portion may further extend parallel to an inclination of the roof, in operation.

In an embodiment of a fastening arrangement according to the first aspect, the securing means comprises one or more through holes and one or more securing elements, the one or more securing elements extending parallel to the receiving portion, in operation.

In an embodiment of a fastening arrangement according to the first aspect, the attachment portion, the engagement portion, the receiving portion and the securing portion are formed from a single piece of sheet metal.

An advantage with this embodiment is that a compact solution is provided and that the production of the fastening arrangement can be simplified and the production cost reduced.

In an embodiment of a fastening arrangement according to the first aspect, the receiving portion is a through hole in the engagement portion.

In an embodiment of a fastening arrangement according to the first aspect, the engagement means is positioned at a front portion of the engagement portion, the front portion facing an eaves of the roof, in operation.

In an embodiment of a fastening arrangement according to the first aspect, the engagement portion comprises a first engagement means and a second engagement means, the first engagement means being positioned above the second engagement means in relation to the attachment portion.

In an embodiment of a fastening arrangement according to the first aspect, the first engagement means and the second engagement means are positioned in a row along a line extending perpendicular outwards from the attachment portion.

An advantage with this embodiment is that it is suitable for roof equipment such as snow guards.

According to a second aspect of the invention, the above mentioned and other objectives are achieved with a method for producing a fastening arrangement for fastening a roof equipment to a roof, the method comprising:
punching a single piece of sheet metal to form an attachment portion and an engagement portion,
punching the engagement portion to form a receiving portion for receiving the roof equipment and a tab at least partly formed within the receiving portion; and
bending the tab in an angle from the receiving portion to form a securing portion for securing a portion of the roof equipment to the fastening arrangement.

In an embodiment of a method according to the second aspect, the method further comprises:
punching the attachment portion to form at least one attachment means for attaching the fastening arrangement to the roof.

In an embodiment of a method according to the second aspect, the method further comprises:
bending the attachment portion in an angle from the engagement portion.

In an embodiment of a method according to the second aspect, the method further comprises:
punching the tab to form a securing means of the securing portion. The securing means may comprise one or more through holes.

Further applications and advantages of the embodiments of the invention will be apparent from the following detailed description.

### Brief Description of the Drawings

The appended drawings are intended to clarify and explain different embodiments of the invention, in which:
- Fig. 1 shows a fastening arrangement according to an embodiment of the invention in a side view;
- Fig. 2 shows the fastening arrangement in Fig. 1 in a perspective view;
- Fig. 3 shows roof equipment attached to a fastening arrangement according to an embodiment of the invention in a side view;
- Fig. 4 shows the roof equipment and the fastening arrangement in Fig. 3 in a different side view;
- Fig. 5 shows a fastening arrangement according to another embodiment of the invention in a side view;
- Fig. 6 shows the fastening arrangement in Fig. 5 in a perspective view;
- Fig. 7 shows a fastening arrangement according to another embodiment of the invention in a side view;
- Fig. 8 shows the fastening arrangement in Fig. 7 in a perspective view;
- Fig. 9 shows a fastening arrangement according to another embodiment of the invention in a side view;
- Fig. 10 shows the fastening arrangement in Fig. 9 in a perspective view;
- Figs. 11 and 12 show a method for producing a fastening arrangement according to an embodiment of the invention; and

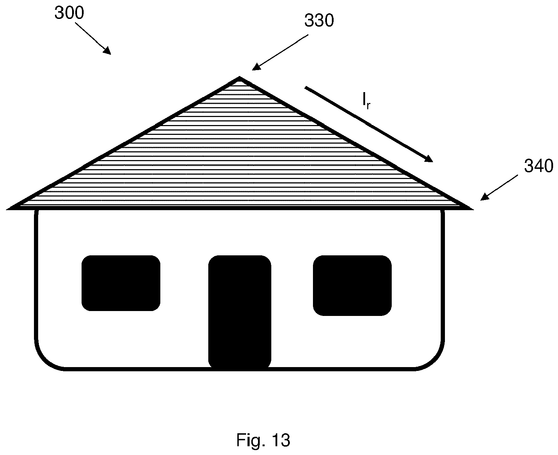

- Fig. 13 schematically shows a house with a roof.

### Detailed Description

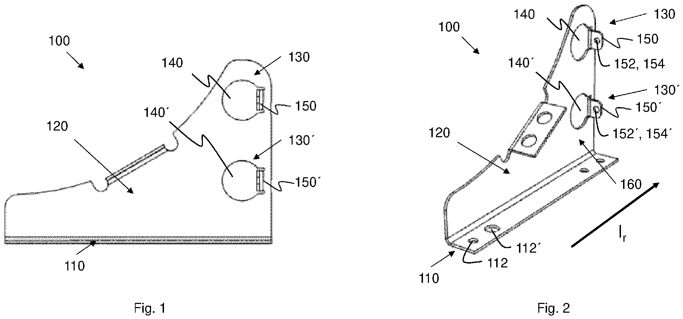

Figs. 1 to 6 show a fastening arrangement 100 according to embodiments of the invention in different views. The herein disclosed fastening arrangement 100 for fastening roof equipment 200 to a roof 300 comprises an attachment portion 110 for attaching the fastening arrangement 100 to the roof 300 and an engagement portion 120 for engagement with a roof equipment 200.

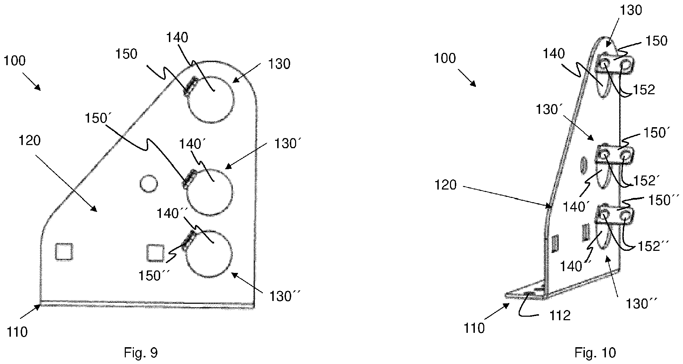

The attachment portion 110 comprises at least one attachment means 112 for attaching the fastening arrangement 100 to the roof 300 or a part attached to the roof 300 such as e.g., the roof 300 shown in Fig. 9. The attachment means 112 may e.g., be configured for attaching the fastening arrangement 100 to a fixed roof structure of the roof 300 such as a batten or to an attachment plate attached to the roof 300. The at least one attachment means 112 may be through holes in the attachment portion 110 arranged to interact with attachment elements such as e.g., screws or nails. Other non-limiting examples of attachment means 112 may be different types of couplings and connections such as screw connections and bolt connections.

With reference to Fig. 2, both the attachment portion 110 and the engagement portion 120 may be plate shaped and have a main extension along an inclination Iᵣ of the roof 300, in operation. The inclination Iᵣ of the roof 300 may be understood to mean a pitch or a slope of the roof 300 having a pitch direction or a slope direction from a ridge 330 to an eaves 340 or roof projection 340 of the roof 300, as shown in Fig. 9. The attachment portion 110 may extend perpendicular to a plane of the engagement portion 120. The attachment portion 110 may e.g., be bent/folded in an angle of approximately 90 degrees in relation to the engagement portion 120. In operation, i.e., when the fastening arrangement 100 is attached to the roof 300, the attachment portion 110 may extends parallel to an inclination Iᵣ of the roof 300 and the engagement portion 120 may extend perpendicular to the inclination Iᵣ of the roof 300. In other words, the attachment portion 110 may extends in a plane of the roof 300 which may also be denoted a surface plane of the roof 300 and the engagement portion 120 may extend outwards from the plane of the roof 300, i.e., have a raised position extending outwards from the surface of the roof 300. However, the invention is not limited thereto, and other orientations of the attachment portion 110 and the engagement portion 120 in relation to each other and the roof 300 are also possible.

The engagement portion 120 comprises at least one engagement means 130 for engagement with the roof equipment 200. With reference to Figs. 1-2 and 5-6, each engagement means 130 comprises a receiving portion 140 for receiving the roof equipment 200 and a securing portion 150 comprising a securing means 152 for securing a portion of the roof equipment 200 to the fastening arrangement 100. The securing portion 150 extends from the receiving portion 140 in an angle. Each engagement means 130 may hence comprise a receiving portion 140 and an associated securing portion 150 which enables the roof equipment 200 which is received in the receiving portion 140 to be fastened to the fastening arrangement 100.

The engagement means 130 may be arranged in a non-peripheral section of the engagement portion 120, i.e., the engagement means 130 may be arranged away from any outer edges of the engagement portion 120. Thus, the engagement means 130 may be surrounded by the engagement portion 120, i.e., no part of the engagement means 130 opens up towards or is in contact with an outer edge of the engagement portion 120.

The receiving portion 140 may extend in a plane of the engagement portion 120. Furthermore, the securing portion 150 may extend perpendicular to the receiving portion 140. In embodiments, the securing portion 150 may further extend outwards from a section of the receiving portion 140. The securing portion 150 may e.g., be integrally formed with or attached to the section of the receiving portion 140. The section of the receiving portion 140 may e.g., a part of a side of the receiving portion 140 or a part of the circumference/rim of the receiving portion 140. In the shown embodiments, the receiving portion 140 is a through hole with a mainly circular shape and the securing portion 150 extends outwards from a part of the edge of the through hole, i.e., the securing portion 150 extends outwards from a part of the circumference/rim of the receiving portion 140. The section of the receiving portion 140 and hence the securing portion 150 may be arranged in a non-peripheral section of the engagement portion 120 such that the securing portion 150 is arranged at a distance from any edges of the engagement portion 120.

The securing portion 150 may be smaller than the receiving portion 140. For example, an area of the securing portion 150 in its main extension plane may be smaller than an area of the receiving portion 140 in its main extension plane. In this way, the securing portion 150 can be formed within the receiving portion 140. In the shown embodiments, the receiving portion 140 is a through hole in the engagement portion 120 and the securing portion 150 is a tab/flap smaller than the through hole. The tab/flap can hence be formed within the through hole, as will be further described below with reference to the method of the invention.

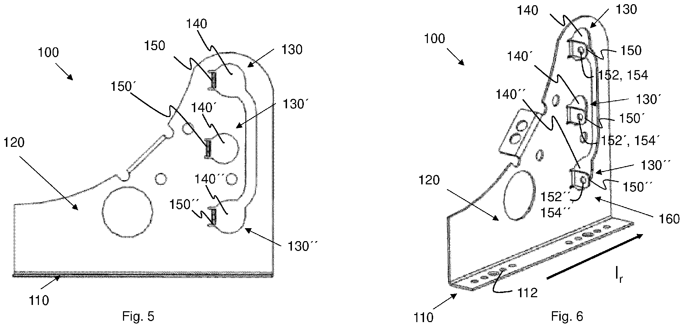

With reference to Figs. 1 and 2, the section of the receiving portion 140 from which the securing portion 150 extends may face the eaves 340 of the roof 300, in operation. In this way, the securing portion 150 is placed below the roof equipment 200 received in the receiving portion 140, i.e., closer to the eaves 340 of the roof 300, and may act as a support for the roof equipment 200 against forces in the direction towards the eaves 340 of the roof 300. With reference to Figs. 5 and 6, the section of the receiving portion 140 from which the securing portion 150 extends may face the ridge 330 of the roof 300, in operation. In this way, the securing portion 150 is placed above the roof equipment 200 received in the receiving portion 140, i.e., closer to the ridge 330 of the roof 300, and is easily accessible to personal mounting the roof equipment 200.

In the shown embodiments, the receiving portion 140 is a through hole in the engagement portion 120 and the securing portion 150 is a tab/flap extending outwards from a section of the through hole in an angle of about 90 degrees. An engagement means 130 with this configuration may be suitable e.g., for engagement with roof equipment 200 being or comprising tubes or pipes such as e.g., a snow guard. In the embodiment shown in Figs. 1 and 2, the two receiving portions 140 are both circular through holes and the associated securing portions 150 extend from the sections of the receiving portions 140 facing the eaves 340 of the roof 300, in operation. In the embodiment shown in Figs. 5 and 6, one receiving portion 140 is a circular through hole and two receiving portions 140 are circular through holes which are connected with an elongated slot and the associated securing portions 150 extend from sections of the receiving portions 140 facing the ridge 330 of the roof 300, in operation. However, the shape and position of the receiving portion 140 and the securing portion 150 may be adapted to engage with different types of roof equipment 200. As non-limiting examples the receiving portion 140 may be a circular or rectangular through hole, an elongated slot or slit that may or may not be combined with through holes and the securing portion 150 may have a circular, rectangular, or tapered shape and extend adjacent to any part of the receiving portion 140 in an angle. The angle between the securing portion 150 and the receiving portion 140 may be approximately 90 degrees, e.g., in an interval between 80 and 100 degrees. The angle may further be in a bigger interval such as e.g., between 45 to 135 degrees or between 60 to 120 degrees.

In embodiments, the engagement means 130 is positioned at a front portion 160 of the engagement portion 120, the front portion 160 facing the eaves 340 of the roof 300, in operation. Thus, the engagement means 130 may be positioned closer to a first side of the engagement portion 120 than to a second side of the engagement portion 120, where the first side may be facing the eaves 340 of the roof 300 and the second side may be facing the ridge 330 of the roof 300, in operation. For example, a first distance between the engagement means 130 and the first side of the engagement portion 120 may e.g., be 90-20% 80-40%, or 60-30% of a second distance between the engagement means 130 and the second side of the engagement portion 120.

In the embodiment shown in Figs. 1 to 4, the engagement portion 120 comprises a first engagement means 130 and a second engagement means 130', the first engagement means 130 being positioned above the second engagement means 130' in relation to the attachment portion 110. In operation, the first engagement means 130 may hence be further away from the roof 300, i.e., at a larger height, than the second engagement means 130'. The first engagement means 130 and the second engagement means 130' may further be positioned in a row along a line extending perpendicular outwards from the attachment portion 110. Thus, the first engagement means 130 and the second engagement means 130' may be aligned and centred in relation to the line extending perpendicular outwards from the attachment portion 110. In operation, the line may further extend perpendicular outwards from the roof 300.

When the engagement portion 120 comprises more than two engagement means 130, the three or more engagement means 130 may also be positioned in one or more of the above-described ways. The three or more engagement means 130 may hence be positioned at the front portion 160 of the engagement portion 120, above each other in relation to the attachment portion 110, and/or in a row along a line extending perpendicular outwards from the attachment portion 110. In the embodiment shown in Figs. 5 to 10, the engagement portion 120 comprises a first engagement means 130, a second engagement means 130' and a third engagement means 130" positioned at the front portion 160 of the engagement portion 120 in a row along a line extending perpendicular outwards from the attachment portion 110.

With reference to Figs. 1 to 8, the securing portion 150 may be aligned with each other and arranged parallel to a line extending perpendicular outwards from the main extension of the attachment portion 110, i.e., parallel to a line extending perpendicular outward from the surface of the roof 300 in operation. However, the securing portion 150 may in embodiments instead be arranged at an angle to a line extending perpendicular outwards from the main extension of the attachment portion 110, as shown in Figs. 9 and 10. In the embodiment shown in Figs. 9 and 10, the securing portions 150 are arranged a part of the circumference/rim of the respective receiving portion 140 which is on an upper half of the circumference/rim of the receiving portion 140, the upper half of the circumference/rim of the receiving portion 140 facing away from the attachment portion 110.

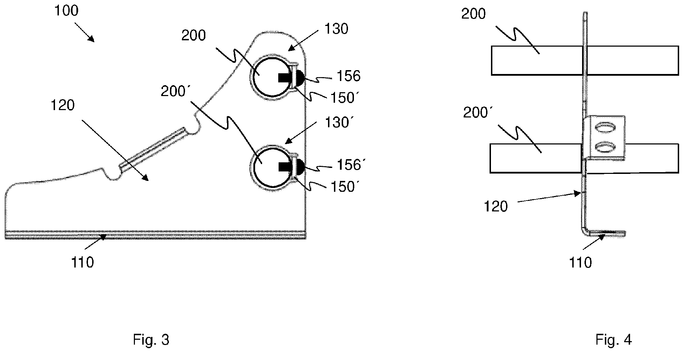

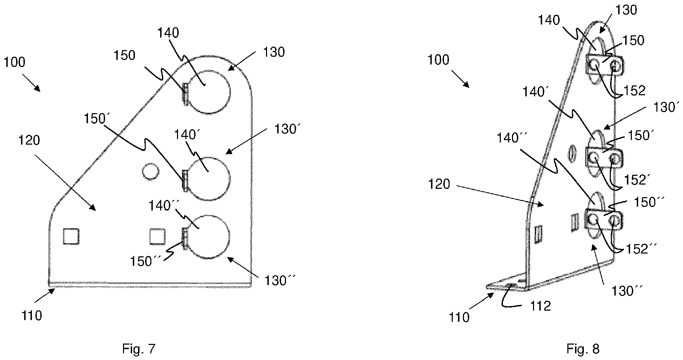

With reference to Figs. 2 and 4, the securing means 152 of the securing portion 150 may comprise a through hole 154 and a securing element 156 such as e.g., a screw or a nail. Other non-limiting examples of securing means 152 may be different types of couplings and connections such as screw connections and bolt connections. When the securing element 156 is used to secure a portion of the roof equipment 200 to the fastening arrangement 100, the securing element 156 may extend parallel to the receiving portion 140, as shown in Fig. 3. The securing element 156 may further extend perpendicular to a main extension of the roof equipment 200. In embodiments, the securing means 152 of the securing portion 150 may comprise more than one through hole, e.g., two through holes as shown in Figs. 8 and 10.

In embodiments, the attachment portion 110, the engagement portion 120, the receiving portion 140 and the securing portion 150 are formed from a single piece of sheet metal 10. In other words, the fastening arrangement 100 may be formed from a common structure. The fastening arrangement 100 may hence be produced from a single piece of material, such as sheet metal punched and bended/folded in a suitable way to form the different portions and means of the fastening arrangement 100.

According to an aspect of the invention a method for producing a fastening arrangement 100 from a single piece of sheet metal 10 is provided. The method comprises punching a single piece of sheet metal 10 to form an attachment portion 110 and an engagement portion 120. The method further comprises punching the engagement portion 120 to form a receiving portion 140 for receiving the roof equipment 200 and a tab 15 at least partly formed within the receiving portion 140. The method further comprises bending the tab 15 in an angle from the receiving portion 140 to form a securing portion 150 for securing a portion of the roof equipment 200 to the fastening arrangement 100.

In embodiments, the method further comprises punching the attachment portion 110 to form at least one attachment means 112 for attaching the fastening arrangement 100 to the roof 300.

In embodiments, the method further comprises bending the attachment portion 110 in an angle from the engagement portion 120.

In embodiments, the method further comprises punching the tab 15 to form a securing means 152 of the securing portion 150. The securing means 152 may comprise one or more through holes 154.

The method for producing the fastening arrangement 100 can be extended into embodiments corresponding to the embodiments of the fastening arrangement 100. Hence, an embodiment of the method can be used to produce a fastening arrangement 100 comprising the feature(s) of the corresponding embodiment of the fastening arrangement 100.

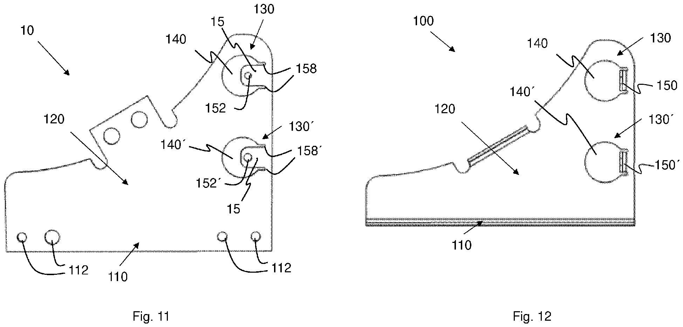

Fig. 11 shows the single piece of sheet metal 10 after one or more of the punching steps of the method according to the invention. With reference to Fig. 11, the punching may comprise punching one or more holes in the single piece of sheet metal 10 to form the different portions and/or means of the fastening arrangement 100. The single piece of sheet metal 10 shown in Fig. 11 has been punched to form the attachment portion 110 and the engagement portion 120. The engagement portion 120 has further been punched to form two engagement means 130.

In the shown embodiment, through holes has been punched in the engagement portion 120 to form receiving portions 140 and tabs 15 at least partly formed within the receiving portions 140. Each receiving portions 140 may be mainly circular with a tab/flap 15 at least partly extending into the through hole, as shown in Fig. 11. The hole itself may form the receiving portion 140 and the tab/flap 15 may after being bent form the securing portion 150. Each tab/flap 15 is formed within a hole and is hence formed from material of the sheet metal 10 which would otherwise have been removed, i.e., from scrap material. That the tab/flap 15 is smaller than the hole and can be formed within the hole allows the receiving portion 140 and the securing portion 150 to be formed in a material efficient way by the method according to the invention.

Furthermore, through holes may punched in the attachment portion 110 of the fastening arrangement 100 to form the at least one attachment means 112 and one or more through holes may be punched in the tab/flap 15 to form the securing means 152 of the securing portion 150. The securing means 152 may comprise one or more through holes 154.

The punching may be performed in one or more steps, i.e., the different portions and/or means of the fastening arrangement 100 may all be formed together in a single punch or separately in several different punches.

With reference to Fig. 12, one or more portions of the single piece of sheet metal 10 is then bent to produce the fastening arrangement 100. The method comprises bending the tab 15 in an angle from the receiving portion 140 to form the securing portion 150. The method may further comprise bending the attachment portion 110 in an angle from the engagement portion 120. In the shown embodiment, the securing portion 150 has been bent perpendicular to the receiving portion 140 and the attachment portion 110 has been bent perpendicular to the engagement portion 120. Similar to the punching step(s), the bending may be performed in one or more steps.

With reference to Figs. 2 and 6, the tab 15 and the attachment portion 110 may be bent relative to the engagement portion 120 such that the securing portion 150 and the attachment portion 110 extend outward from the engagement portion 120 on the same side of the engagement portion 120. Alternatively, the tab 15 and the attachment portion 110 may be bent relative to the engagement portion 120 such that the securing portion 150 and the attachment portion 110 extend outward from the engagement portion 120 on opposite sides of the engagement portion 120, as shown in Figs. 8 and 10.

To simplify the bending of the tab/flap 15 to form the securing portion 150, bending indicators 158 may be punched out in the single piece of sheet metal 10. With reference to Fig. 11, bending indicators 158 may e.g., be formed on either side of the tab/flap 15. In this way, the securing portion 150 can easily be bent and is further bent away from the through hole such that the receiving portion 140 becomes an essentially circular through hole in the engagement portion 120.

In the disclosed non-limiting embodiment, the roof equipment 200 in Figs. 3 and 4 are tubular roof equipment such as e.g., a snow guard. Non-limiting further examples of roof equipment are roof ladders, solar panels, ridge and roof rails, hatches, guardrails, fall protection and other safety devices, snow stoppers, roof steps, etc.

Finally, it should be understood that the invention is not limited to the embodiments described above, but also relates to and incorporates all embodiments within the scope of the appended independent claims.

## Claims

1. A fastening arrangement (100) for fastening roof equipment (200) to a roof (300), the fastening arrangement (100) comprising:
an attachment portion (110) comprising at least one attachment means (112) for attaching the fastening arrangement (100) to the roof (300); and
an engagement portion (120) comprising at least one engagement means (130) for engagement with a roof equipment (200), the engagement means (130) comprising a receiving portion (140) for receiving the roof equipment (200) and a securing portion (150) comprising a securing means (152) for securing a portion of the roof equipment (200) to the fastening arrangement (100), wherein the securing portion (150) extends from the receiving portion (140) in an angle.

2. The fastening arrangement (100) according to claim 1, wherein the engagement means (130) is arranged in a non-peripheral section of the engagement portion (120).

3. The fastening arrangement (100) according to claim 1 or 2, wherein the securing portion (150) is smaller than the receiving portion (140).

4. The fastening arrangement (100) according to any one of the preceding claims, wherein the receiving portion (140) extends in a plane of the engagement portion (120).

5. The fastening arrangement (100) according to any one of the preceding claims, wherein the securing portion (150) extends perpendicular to the receiving portion (140).

6. The fastening arrangement (100) according to any one of the preceding claims, wherein the securing portion (150) extends outwards from a section of the receiving portion (140).

7. The fastening arrangement (100) according to any one of the preceding claims, wherein the attachment portion (110) extends perpendicular to a plane of the engagement portion (120).

8. The fastening arrangement (100) according to any one of the preceding claims, wherein the securing means (152) comprises one or more through holes (154) and one or more securing elements (156), the one or more securing elements (156) extending parallel to the receiving portion (140), in operation.

9. The fastening arrangement (100) according to any one of the preceding claims, wherein the attachment portion (110), the engagement portion (120), the receiving portion (140) and the securing portion (150) are formed from a single piece of sheet metal (10).

10. The fastening arrangement (100) according to any one of the preceding claims, wherein the engagement portion (120) comprises a first engagement means (130) and a second engagement means (130'), the first engagement means (130) being positioned above the second engagement means (130') in relation to the attachment portion (110).

11. The fastening arrangement (100) according to claim 10, wherein the first engagement means (130) and the second engagement means (130') are positioned in a row along a line extending perpendicular outwards from the attachment portion (110).

12. A method for producing a fastening arrangement (100) for fastening a roof equipment (200) to a roof (300), the method comprising:
punching a single piece of sheet metal (10) to form an attachment portion (110) and an engagement portion (120),
punching the engagement portion (120) to form a receiving portion (140) for receiving the roof equipment (200) and a tab (15) at least partly formed within the receiving portion (140); and
bending the tab (15) in an angle from the receiving portion (140) to form a securing portion (150) for securing a portion of the roof equipment (200) to the fastening arrangement (100).

13. The method according to claim 12, the method further comprising:
punching the attachment portion (110) to form at least one attachment means (112) for attaching the fastening arrangement (100) to the roof (300).

14. The method according to claim 12 or 13, the method further comprising:
bending the attachment portion (110) in an angle from the engagement portion (120).

15. The method according to any one of claim 12 to 14, the method further comprising:
punching the tab (15) to form a securing means (152) of the securing portion (150).
